# EUROPÄISCHE PATENTSCHRIFT

(11) **EP 4 194 173 B1**
(45) Veröffentlichungstag und Bekanntmachung des Hinweises auf die Patenterteilung: **23.07.2025**
(21) Anmeldenummer: 22211080.1
(22) Anmeldetag: 02.12.2022
(51) Int. Cl.: B29C 33/30, B29C 33/50, B29C 70/34, B60B 1/04, B60B 5/02, B60B 25/00, B21D 53/30, B29C 43/36, B29C 70/44, B29C 70/46, B60B 21/02, B29L 31/30, B29L 31/32

(54) **WERKZEUGEINRICHTUNG UND VERFAHREN ZUR HERSTELLUNG EINER FELGE**
TOOL DEVICE AND METHOD FOR PRODUCING A RIM
DISPOSITIF D'OUTIL ET PROCÉDÉ DE FABRICATION D'UNE JANTE

(30) Priorität: 13.12.2021 DE 102021006136
(43) Veröffentlichungstag der Anmeldung: 14.06.2023
(73) Patentinhaber: DT Swiss AG, 2504 Biel (CH)
(72) Erfinder: Henig, Andreas, 2504 Biel (CH)
(74) Vertreter: BSB Patentanwälte Schütte & Engelen Partnerschaft mbB

(56) Entgegenhaltungen:
- EP-A2- 1 231 077
- CN-A- 101 797 865

## Beschreibung

Die Erfindung betrifft eine Werkzeugeinrichtung zur Herstellung einer Felge aus Faserverbundwerkstoff für im bestimmungsgemäßen Gebrauch regelmäßig wenigstens teilweise muskelbetriebene Fahrzeuge und insbesondere Fahrräder, eine damit hergestellte Felge und die Verwendung der Werkzeugeinrichtung zur Herstellung. Im Stand der Technik sind Felgen aus faserverstärkten Kunststoffen bekannt geworden, mit denen das Gewicht der Felgen verringert werden kann. Gleichzeitig erreichen solche Felgen bei geringerem Gesamtgewicht eine vergleichbare oder sogar höhere Stabilität wie Metallfelgen. Ein Nachteil derartiger Felgen ist allerdings die aufwendige Herstellung, da viele Herstellungsschritte meist von Hand durchgeführt werden müssen, was zu höheren Kosten führt. Außerdem sind die vielen manuellen Verfahrensschritte fehleranfällig, wodurch die Ausschussrate steigt und die Herstellkosten nochmals erhöht werden. Andererseits sind die Stückzahlen hochwertiger Fahrradfelgen nicht so groß, dass sich die Entwicklung und der Aufbau einer vollautomatisierten Fertigung rechnen würde. Es hat sich herausgestellt, dass die Festigkeit der hergestellten Felgen nicht immer den Erwartungen entspricht.

Mit der EP 1 231 077 A2 und der CN 10179865 A sind Vorrichtungen und Verfahren zur Herstellung von Fahrradfelgen aus Faserverbundwerkstoffen bekannt geworden, bei denen zwischen den herzustellenden Felgenhörnern auf dem Felgenbett elastische Formwerkzeuge eingesetzt werden, um ein einfacheres Entnehmen der Formwerkzeuge nach dem Aushärten der fertigen Felge zu ermöglichen, da dort im Bereich der Felgenhörner regelmäßig die Felgenhörner axial nach innen überstehen und einen Hinterschnitt bilden. Das erleichtert die Fertigung. Aber auch die Festigkeit von damit hergestellte Felgen entspricht nicht immer den Erwartungen.

Es ist deshalb die Aufgabe der vorliegenden Erfindung, eine Werkzeugeinrichtung und deren Verwendung zur Herstellung einer Felge aus Faserverbundwerkstoff zur Verfügung zu stellen, womit Felgen mit besserer Qualität und vorzugsweise einer geringeren Ausschussrate herstellbar sind.

Diese Aufgabe wird gelöst durch eine Werkzeugeinrichtung mit den Merkmalen des Anspruchs 1 und durch den Verwendungsanspruch 10. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Werkzeugeinrichtung dient zur Herstellung einer Felge für wenigstens teilweise muskelbetriebene Fahrzeuge und insbesondere Fahrräder, wobei die Felge gegenüberliegende Felgenflanken, ein Felgenbett und einen Felgenboden und an den (radial äußeren Enden der) Felgenflanken ausgebildete Felgenhörner aufweist. Insbesondere treffen sich an dem radial innersten Punkt die Felgenflanken (Seitenwände). Die Werkzeugeinrichtung umfasst zwei Formeinrichtungen und eine Ringeinrichtung. Die Ringeinrichtung umfasst eine als Ringeinheit ausgebildete Einheit und die Formeinrichtungen umfassen jeweils eine als Formeinheit ausgebildete Einheit. Die Formeinrichtungen weisen jeweils Kontaktflächen zur Ausbildung wenigstens eines Teils jeweils einer Felgenflanke und der äußeren Sichtfläche der Felgenhörner auf. Die Ringeinrichtung dient zur Ausbildung des Felgenbettes und der axial nach innen ausgerichteten Flächen der Felgenhörner. Die Ringeinrichtung umfasst eine Ringeinheit aus einem weniger elastischen Material und wenigstens einen Ringüberzug aus einem stärker elastischen Material und die Formeinrichtungen umfassen jeweils eine Formeinheit aus einem weniger elastischen Material und wenigstens einen darauf anbringbaren Formüberzug aus einem stärker elastischen Material.

Eine Wandstärke des Überzugs beträgt insbesondere zwischen einem Achtel (und vorzugsweise einem Viertel) der minimalen Wandstärke des Felgenbettes der herzustellenden Felge und dem Achtfachen (und vorzugsweise dem Vierfachen) der minimalen Wandstärke des Felgenbettes der herzustellenden Felge. Die Wandstärke des Überzugs beträgt zwischen 0,1 mm und 10 mm.

Die Ringeinrichtung umfasst eine Ringeinheit aus einem weniger elastischen Material und wenigstens einen Ringüberzug aus einem stärker elastischen Material. Alternativ oder zusätzlich weisen die Formeinrichtungen jeweils eine Formeinheit aus einem weniger elastischen Material und wenigstens einen darauf anbringbaren Formüberzug aus einem stärker elastischen Material auf. Das bedeutet, dass entweder ein Ringüberzug vorhanden ist oder Formüberzüge an den Formeinheiten oder sowohl eine Ringüberzug an der Ringeinheit und Formüberzüge an den Formeinheiten.

Die Erfindung hat viele Vorteile. Ein erheblicher Vorteil besteht darin, dass die Felgenhörner zwischen den Formeinrichtungen und der Ringeinrichtung gebildet werden. Dabei umfasst die Ringeinrichtung die weniger elastische Ringeinheit und den elastischer ausgebildeten Ringüberzug und/oder die Formeinrichtungen weisen einen elastischeren Formüberzug (insbesondere im Bereich des Felgenhorns) auf. Dadurch kann ein optimaler Druck auf das Felgenhorn bei der Fertigung ausgeübt werden. Die Wandstärke des Überzugs zwischen 1/8 und dem 8-fachen der minimalen Wandstärke des Felgenbodens sorgen für eine zuverlässige Funktion. Wandstärken zwischen 0,1 mm und 10 mm sind bei Felgen für Fahrrädern sehr vorteilhaft.

Auch die Formeinheiten bestehen aus einem weniger elastischen Material als der Ringüberzug bzw. der Formüberzug. Dadurch kann der Ringüberzug und/oder der Formüberzug elastisch nachgeben und den nötigen Druck auf die Felgenhörner und/oder das Felgenbett aufbauen und weitergeben. Das elastischere Material des Ringüberzugs und/oder des Formüberzugs sorgt einerseits dafür, dass keine Überlastung auftritt und andererseits dafür, dass ein ausreichender Druck erzeugt wird. Wenn zwei sehr harte und unnachgiebige Materialien den Raum für das Felgenhorn ausbilden, kann es - bei zu viel Material - zu einer Überlastung und dadurch zu Verschiebungen der Fasern und auch zu Fehlbildungen an dem Felgenhorn kommen. Andererseits kann es bei zu wenig Material zu Hohlstellen und Lufteinschlüssen und dadurch bedingt zu Schwächungen des Materials kommen.

Eine ideale Materialmenge ist naturgemäß nicht immer vorhanden. Die Erfindung erlaubt nun einen Ausgleich. Bei (etwas) zu viel Material wird der Druck auf die Wandung des Felgenhorns vergrößert und das elastischere Material des Ringüberzugs und/oder des Formüberzugs stärker komprimiert und bei (etwas) weniger Faserverbundmaterial wird der Druck (etwas) verringert und das elastischere Material des Ringüberzugs und/oder des Formüberzugs weniger stark komprimiert. In beiden Fällen kann bei bestimmten Abweichungen noch ausreichend Druck aufgebracht werden, sodass eine Felge mit hoher und verbesserter Qualität herstellbar ist.

Erfindungsgemäß ist der Ringüberzug vorhanden und es sind Formüberzüge vorgesehen. Dann wird auf einer Seite ein härteres Material und auf der anderen Seite ein weicheres Material eingesetzt. Besonders bevorzugt wird der Ringüberzug eingesetzt und kein Formüberzug. Grundsätzlich ist aber auch der gemeinsame Einsatz von Ring- und Formüberzügen möglich.

Es kann jedenfalls an jeder Stelle der Felge eine genügend große Presskraft aufgebracht werden. Eine Begrenzung dadurch, dass ein festes Werkzeugteil auf ein anderes festes Werkzeugteil trifft, entsteht nicht.

Die Optik und auch die Belastbarkeit können verbessert werden. Es kann eine passende Kompaktierung in dem Bereich des Felgenhorns hergestellt werden. Die Werkzeugeinrichtung bietet besonders bevorzugt eine härtere Oberfläche an der Formeinrichtung und ein Gegenstück mit einer elastischeren Oberfläche an dem Ringüberzug, unter dem wiederum eine härtere Oberfläche an der Ringeinheit vorhanden ist, oder umgekehrt. Die elastische Seite dehnt sich bei Temperatur aus und sichert eine gute Lagenverbindung zwischen den einzelnen Faserlagen in dem Hornbereich.

Es können damit mögliche (kleinere) Einschlüsse und Fehlstellen beseitigt werden. Auch eine Delamination im Hornbereich durch nicht ausreichende Kompaktierung kann vermieden werden. Die Oberflächengüte im Hornbereich kann verbessert werden. Es können eine bessere interlaminare Verbindung der einzelnen Lagen in dem Hornbereich und höhere mechanische und strukturelle Eigenschaften erreicht werden.

Mit der Werkzeugeinrichtung wird das Felgenhorn nun optimal gepresst. Es werden nicht mehr zwei harte Werkzeugteile aufeinandergedrückt bzw. von beiden Seiten auf die Faserlagen gedrückt. Wenigstens eine Pressfläche ist elastischer als die andere Pressfläche.

Der Felgenboden (Felgenbauch) und die unteren Felgenflanken (Felgenseiten) werden vorzugsweise von einem aufblasbaren Schlauch oder einer Blase oder einem sich (unter Temperatur) ausdehnenden Kern an die (insbesondere festen) Formeinheiten gepresst. In diesen Bereichen ist die Kompaktierung von den einzelnen Faserlagen (z. B. Carbonlagen und insbesondere Prepreglagen) ausreichend.

Das Felgenbett wird vorzugsweise radial nach außen gegen die Ringeinrichtung und insbesondere den Ringüberzug gepresst. Dadurch wird vermieden, dass in irgendeinem Bereich ein festes Werkzeug (über die Faserlagen direkt) auf festes Werkzeug stößt. Eine ausreichende Pressung kann gesichert werden.

So können die damit hergestellten Felgen bezüglich der mechanischen und strukturellen Eigenschaften und Festigkeiten das mögliche Potential besser ausnutzen.

Um eine gute Kompaktierung im Felgenhornbereich zu gewährleisten, wird mindestens ein festes, hartes Werkzeugteil mit einem elastischen Material umhüllt oder ersetzt bzw. einem Ringüberzug versehen. Dieses elastische(re) Material erzeugt während des Pressvorgangs unter Temperatur die erforderliche Presskraft um den Hornbereich zu kompaktieren.

Ein erheblicher Vorteil ist, dass jeder Bereich der Felge gepresst wird. Mindestens eine Seite von der Felgenwand wird von einem Werkzeug oder einem Medium gepresst.

Vorzugsweise ist das Material des Ringüberzugs stärker elastisch (=elastischer) ausgebildet ist als das Material der Formeinheiten bzw. ist der Ringüberzug elastischer ausgebildet ist als die Formeinheiten. Dann stellen die Formeinheiten die exakte äußere Formgebung der Felgenflanken und der Felgenhörner zur Verfügung und die axial inneren Seiten der Felgenflanken werden angepasst flexibel und elastisch kompaktiert.

Vorzugsweise umfasst die Ringeinrichtung (und insbesondere die Ringeinheit) eine Mehrzahl umfänglich zusammengesetzter Ringsegmente. Die Ringeinrichtung weist vorzugsweise im radial inneren Bereich eine Kontaktfläche zur Ausbildung des Felgenbettes auf. Die Kontaktfläche zur Ausbildung des Felgenbettes kann unmittelbar an der Ringeinheit ausgebildet sein. Möglich und bevorzugt ist es, dass der Ringüberzug die Kontaktfläche zur Ausbildung des Felgenbettes ausbildet oder zur Verfügung stellt. Der Ringüberzug kann einstückig umlaufend ausgebildet sein oder aus zwei oder mehr Segmenten bestehen.

Die Werkzeugeinrichtung ist sehr vorteilhaft und bietet die Möglichkeit der Herstellung von hochwertigen und reproduzierbaren Felgen insbesondere für Fahrräder.

In bevorzugten Ausgestaltungen umfasst der Ringüberzug wenigstens einen (elastischen bzw. elastischeren) Pressring, welcher insbesondere an die Innenform des Felgenhorns bzw. der Felgenhörner angepasst ist. Vorzugsweise umfasst die Ringeinrichtung zwei separate und axial beabstandete (elastische) (umlaufende) Pressringe. Der Ringüberzug kann sich aber auch durchgängig von dem einen Felgenhorn zu dem anderen Felgenhorn erstrecken, sodass nur ein Pressring vorhanden ist, der die Innenflächen beider Felgenhörner und auch das Felgenbett bedeckt.

Vorzugsweise ist ein Verhältnis der Elastizitätskoeffizienten der Materialien der Ringeinheit (Formeinheit) und des Ringüberzugs (Formüberzugs) größer als 2 oder größer als 5. Das Verhältnis der Elastizitätskoeffizienten kann auch 10, 20 oder 50 oder 100 oder 1000 oder 5000 oder 10000 erreichen und übersteigen. Vorzugsweise ist der Elastizitätskoeffizient bzw. das Elastizitätsmodul des Ringüberzugs (Formüberzugs) kleiner als 5 oder 1 oder 0,1 GPa. Das Elastizitätsmodul der Ringeinheit und/oder das Elastizitätsmodul der Formeinheiten ist vorzugsweise größer als 5 oder 10 oder 25 oder 50 GPa. Das Elastizitätsmodul des Ringüberzugs liegt vorzugsweise zwischen 0,1 MPa und 5 GPa (zwischen 0,1 und 5000 Megapascal) und insbesondere zwischen 0,3 und 30 MPa.

Vorzugsweise bestehen der Ringüberzug und der Formüberzug wenigstens zum Teil aus einem Werkstoff, welcher einer Gruppe von Werkstoffen entnommen ist, die gummiartigen Werkstoffe und Silikonwerkstoffe umfasst.

Insbesondere besteht die Ringeinheit wenigstens überwiegend aus wenigstens einem metallischen Werkstoff und besonders bevorzugt besteht die Ringeinheit (im Wesentlichen oder vollständig) aus einem Leichtmetall. Vorzugsweise bildet die Ringeinheit einen Kern. Die Ringeinheit (bzw. der Kern) besteht vorzugsweise aus einem festeren und/oder weniger elastischem Material als der Ringüberzug. Der Ringüberzug besteht vorzugsweise aus einem elastischeren Material als die Ringeinheit. Entsprechendes gilt vorzugsweise für eine Formeinheit und den Formüberzug.

Der Ringüberzug und/oder die Formüberzüge bestehen insbesondere wenigstens zum Teil aus einem gummielastischen oder gummiartigen Werkstoff. Der Ringüberzug und/oder die Formüberzüge bestehen besonders bevorzugt wenigstens zum Teil oder im Wesentlichen oder nahezu vollständig oder vollständig aus einem Silikonwerkstoff. Möglich ist die Verwendung von Silikonelastomeren, Polyurethanen und/oder wenigstens einem Silikonkautschuk.

Es ist bevorzugt, dass eine Dicke (Wandstärke) des Ringüberzugs und/oder der Formüberzüge größer 0,5 mm und/oder kleiner 5 oder 7 mm beträgt. Insbesondere liegt die Wandstärke in dem radial mittleren Bereich des Felgenhorns zwischen 1 mm und 5 mm und kann z.B. 3 mm oder 4 mm betragen. Eine Mindestwandstärke sorgt dafür, dass ein elastisch komprimierbares Ausgleichsvolumen zur Verfügung steht. Eine Maximalwandstärke sichert eine genaue Formgebung des Bauteils.

Eine Dicke des Ringüberzugs und/oder der Formüberzüge kann auch von dem Elastizitätskoeffizienten (Elastizitätsmodul) abhängen. Wenn der Elastizitätskoeffizient kleiner und der Ringüberzug bzw. die Formüberzüge damit elastischer ist bzw. sind, wird die Wandstärke des Überzugs vorzugsweise geringer gewählt als wenn der Elastizitätskoeffizient des Ringüberzugs bzw. der Formüberzüge größer ist. Ein Produkt aus dem Elastizitätskoeffizient des Ringüberzugs/der Formüberzüge und der Wandstärke kann ein Maß (zur Beurteilung) sein. Bei größerer Elastizität wird die Wandstärke verringert und umgekehrt. Als Wandstärke kann die Wandstärke z. B. in einem typischen Bereich des Ringüberzugs oder z. B. in dem radial mittleren Bereich des Felgenhorns oder des Felgenbettes verwendet werden. Ein wichtiger Aspekt ist, dass die vorgegebene Form eingehalten wird. Abweichungen der Wandstärke in der fertigen Felge von mehr als 10% (oder 5%) sind regelmäßig unerwünscht.

Besonders bevorzugt ist eine Dicke des Ringüberzugs und/oder der Formüberzüge dicker bzw. größer als die Hälfte der axialen Wandstärke bzw. Breite des Felgenhorns (in einem radial mittleren Bereich) und/oder dünner als die dreifache oder fünffache axiale Wandstärke bzw. Breite des Felgenhorns. Insbesondere beträgt eine Wandstärke (Dicke) des Ringüberzugs und/oder der Formüberzüge wenigstens (etwa) die axiale Breite des Felgenhorns (in einem mittleren Bereich) und/oder ist geringer als die dreifache oder zweifache axiale Breite (Wandstärke) des Felgenhorns.

Zur Herstellung zweier Felgen mit unterschiedlichen Abmessungen kann die gleiche Ringeinheit mit unterschiedlichen Ringüberzügen einsetzbar sein. Wenn sich zum Beispiel die axiale Breite nur um 1 mm oder 2 mm unterscheidet, kann ein anderer Ringüberzug mit etwas größerer Wandstärke gewählt werden. Gegebenenfalls wird noch ein Scheibenring zum Breitenausgleich eingelegt oder ein anderes Mittelteil der Ringeinheit mit angepasster Breite verwendet.

Besonders bevorzugt bestehen die Formeinheiten und (und/oder) die Ringeinheit aus (wenigstens) einem Leichtmetall und (und/oder) sind insbesondere spanend gefertigt und/oder bearbeitet. Vorzugsweise sind die Formeinheiten und/oder deren Einheiten an den Kontaktflächen mit der herzustellenden Felge poliert. Das erhöht noch einmal die Qualität der herzustellenden Felge.

Insbesondere umfasst die Werkzeugeinrichtung wenigstens ein Hilfsformteil, welches zusammen mit einer der Ringeinrichtungen eine Formfläche für den Felgenboden ausbildet. Möglich ist es auch, dass für beide Formeinrichtungen jeweils ein Hilfsformteil zur Verfügung gestellt wird. Dann kann wahlweise eine der Formeinrichtungen mit dem zugehörigen Hilfsformteil verwendet werden.

Es ist möglich und bevorzugt, dass die Formeinrichtungen und/oder die Ringeinrichtung und/oder das Hilfsformteil miteinander korrespondierende Ausrichteinheiten aufweisen. Darüber kann eine Ausrichtung der einzelnen Formeinrichtungen und der Ringeinrichtung bzw. des Hilfsformteils zueinander reproduzierbar sichergestellt werden. Zur Befestigung der Formeinrichtungen und der Ringeinrichtung bzw. des Hilfsformteils aneinander sind insbesondere entsprechende Befestigungsmittel vorgesehen, die an entsprechende Befestigungsöffnungen oder an den Ausrichteinheiten montiert werden können. Beispielsweise können Schrauben, Stifte, Nieten, Klemmen oder Rastteile oder dergleichen als Befestigungsmittel eingesetzt werden.

In allen Ausgestaltungen ist es bevorzugt, dass die Formeinrichtungen und die Ringeinrichtung jeweils ein Gewicht kleiner 35 Kilo und insbesondere kleiner 30 Kilo oder kleiner 25 Kilo und besonders bevorzugt, kleiner 20 Kilo oder 15 Kilo aufweisen. Insbesondere weist wenigstens eine Formeinrichtung ein Gewicht kleiner 15 oder kleiner 12 oder kleiner 10 kg auf. Vorzugsweise weisen die beiden Formeinrichtungen und die Ringeinrichtung im zusammengebauten Zustand ein Gesamtgewicht kleiner 35 Kilo oder kleiner 30 Kilo oder sogar kleiner 20 Kilo auf. Dadurch wird es einer Person ermöglicht, die einzelnen Einheiten und die Werkzeugeinrichtung insgesamt auch allein und ohne fremde Hilfe zu bewegen. Das erleichtert die Herstellung.

Dadurch, dass die Werkzeugeinrichtung kompakte Formeinrichtungen und eine kompakte Ringeinheit umfasst, die als Dreh- oder Frästeil hergestellt werden, sinken die Fertigungskosten für eine Werkzeugeinrichtung ganz erheblich. Es wird ermöglicht, eine größere Anzahl von Werkzeugeinrichtungen für eine parallele Produktion einzusetzen. Es können bei geringeren Kosten Felgen mit höherer Qualität hergestellt werden, welche zudem nur eine sehr geringe oder gar keine Nacharbeit der Sichtflächen benötigen.

Eine erfindungsgemäße Verwendung wird unter Verwendung einer Werkzeugeinrichtung durchgeführt. Die Werkzeugeinrichtung wird zur Herstellung einer Felge für wenigstens teilweise muskelbetriebene Fahrzeuge und insbesondere Fahrräder verwendet, wobei die Werkzeugeinrichtung ausgebildet, wie zuvor beschrieben.

Die Anmelderin behält sich vor, ein Verfahren zu beanspruchen.

Das anmeldungsgemäße Verfahren dient zur Herstellung einer Felge aus Faserverbundwerkstoff mit gegenüberliegenden Felgenflanken, einem Felgenbett und einem Felgenboden und an den (radial äußeren Enden der) Felgenflanken ausgebildeten Felgenhörnern für (im bestimmungsgemäßen und typischen Betrieb) wenigstens teilweise muskelbetriebene Fahrzeuge und insbesondere Fahrräder und wird unter Verwendung einer Werkzeugeinrichtung, wie zuvor beschrieben, durchgeführt. Die Werkzeugeinrichtung weist zwei Formeinrichtungen auf, zum Beispiel eine linke Formeinrichtung und eine rechte Formeinrichtung. Die Werkzeugeinrichtung umfasst weiterhin eine Ringeinrichtung.

Das Verfahren wird mit den folgenden Verfahrensschritten in dieser oder einer anderen sinnvollen Reihenfolge durchgeführt:
- Es wird eine Formeinrichtung der beiden Formeinrichtungen ausgewählt und bereitgestellt. Die Formeinrichtung umfasst eine Flankenkontaktfläche zur Ausbildung einer seitlichen (und zum Beispiel der linken oder auch der rechten) Felgenflanke auf.
- Es wird (wenigstens) eine erste Faserlage des wenigstens einen Faserverbundwerkstoffs auf die Flankenkontaktfläche der ausgewählten Formeinrichtung aufgebracht, welche die Sichtlage wenigstens eines überwiegenden Teils der Sichtfläche und insbesondere nahezu die gesamte oder die gesamte Sichtfläche der zugehörigen (und zum Beispiel linken) Felgenflanke bildet.
- Es wird die andere Formeinrichtung bereitgestellt, die eine Flankenkontaktfläche zur Ausbildung der anderen (und gegenüberliegenden) seitlichen Felgenflanke umfasst. Diese Felgenflanke kann zum Beispiel die rechte Felgenflanke oder umgekehrt entsprechend die linke Felgenflanke ausbilden.
- Es wird (wenigstens) eine erste Faserlage des wenigstens einen Faserverbundwerkstoffs auf die Flankenkontaktfläche der anderen Formeinrichtung aufgebracht, welche als Sichtlage wenigstens einen überwiegenden Teil der Sichtfläche und insbesondere nahezu die gesamte oder die gesamte Sichtfläche der anderen Felgenflanke bildet.

- Es wird eine Mehrzahl von Ringsegmenten zu einer Ringeinheit verbunden und mit wenigstens einem Ringüberzug versehen, sodass eine Ringeinrichtung mit einer (radial innen) umlaufenden Felgenbettkontaktfläche und Kontaktflächen für die Felgenhörner entsteht, wobei wenigstens eine erste Faserlage des Faserverbundwerkstoffs aufgebracht wird, welche das Felgenbett bildet.
- Die Ringeinrichtung wird an eine der Formeinrichtungen angelegt (also zum Beispiel die linke oder die rechte Formeinrichtung). Die andere Formeinrichtung (also dementsprechend die rechte oder linke Formeinrichtung) wird daran angelegt und die Ringeinrichtung und die Formeinrichtungen werden miteinander verbunden.
- Der Faserverbundwerkstoff wird verfestigt und insbesondere ausgehärtet und es werden die Ringsegmente und die

Formeinrichtungen entfernt und die Felge wird entnommen. Ein anderes bzw. abgewandeltes anmeldungsgemäßes Verfahren zur Herstellung einer Felge mit gegenüberliegenden Felgenflanken, einem Felgenbett und einem Felgenboden und an den Felgenflanken ausgebildeten Felgenhörnern aus Faserverbundwerkstoff für wenigstens teilweise muskelbetriebene Fahrzeuge und insbesondere Fahrräder wird unter Verwendung einer Werkzeugeinrichtung mit zwei Formeinrichtungen, z. B. einer linken Formeinrichtung und einer rechten Formeinrichtung, und mit einer Ringeinrichtung durchgeführt. Die Formeinrichtungen weisen jeweils eine Formeinheit und einen Formüberzug auf. Dabei werden die folgenden Verfahrensschritten in dieser oder einer anderen sinnvollen Reihenfolge durchgeführt:
- Es wird eine Formeinrichtung der beiden Formeinrichtungen ausgewählt und bereitgestellt. Darauf wird ein Formüberzug aufgebracht, sodass eine Formeinrichtung mit einer Flankenkontaktfläche zur Ausbildung einer seitlichen Felgenflanke zur Verfügung gestellt wird.
- Es wird (wenigstens) eine erste Faserlage des wenigstens einen Faserverbundwerkstoffs auf die Flankenkontaktfläche der ausgewählten Formeinrichtung aufgebracht, welche die Sichtlage wenigstens eines überwiegenden Teils der Sichtfläche und insbesondere nahezu die gesamte oder die gesamte Sichtfläche der zugehörigen (und zum Beispiel linken) Felgenflanke bildet.
- Es wird die andere Formeinheit bereitgestellt und darauf wird ein Formüberzug aufgebracht, sodass die andere Formeinrichtung mit einer Flankenkontaktfläche zur Ausbildung der anderen (und gegenüberliegenden) seitlichen Felgenflanke zur Verfügung gestellt wird. Diese Felgenflanke kann zum Beispiel die rechte Felgenflanke oder umgekehrt entsprechend die linke Felgenflanke ausbilden.
- Es wird (wenigstens) eine erste Faserlage des wenigstens einen Faserverbundwerkstoffs auf die Flankenkontaktfläche der anderen Formeinrichtung aufgebracht, welche als Sichtlage wenigstens einen überwiegenden Teil der Sichtfläche und insbesondere nahezu die gesamte oder die gesamte Sichtfläche der anderen Felgenflanke bildet.
- Es wird eine Mehrzahl von Ringsegmenten zu einer Ringeinheit verbunden (und gegebenenfalls mit wenigstens einem Ringüberzug versehen), sodass eine Ringeinrichtung mit einer (radial innen) umlaufenden Felgenbettkontaktfläche und Kontaktflächen für die Felgenhörner entsteht, wobei wenigstens eine erste Faserlage des Faserverbundwerkstoffs aufgebracht wird, welche das Felgenbett bildet.
- Die Ringeinrichtung wird an eine der Formeinrichtungen angelegt (also zum Beispiel die linke oder die rechte Formeinrichtung). Die andere Formeinrichtung (also dementsprechend die rechte oder linke Formeinrichtung) wird daran angelegt und die Ringeinrichtung und die Formeinrichtungen werden miteinander verbunden.
- Der Faserverbundwerkstoff wird verfestigt und insbesondere ausgehärtet und es werden die Ringsegmente und die Formeinrichtungen entfernt und die Felge wird entnommen.

Damit ist die Felge (gemäß der unterschiedlichen und miteinander kombinierbaren Varianten) im Wesentlichen fertiggestellt.

Anschließend kann gegebenenfalls die Einbringung von Speichenlöchern erfolgen.

Bei den Verfahren wird insbesondere der Überzug (Formüberzug, Ringüberzug) mit einer solchen Wandstärke versehen, die insbesondere zwischen einem Achtel der minimalen Wandstärke des Felgenbodens und/oder des Felgenhorns und dem Achtfachen der der minimalen Wandstärke des Felgenbodens und/oder des Felgenhorns beträgt.

Das anmeldungsgemäße Verfahren hat viele Vorteile. Ein erheblicher Vorteil des erfindungsgemäßen Verfahrens ist, dass die im bestimmungsgemäßen Betrieb äußeren Sichtflächen (unmittelbar) durch die Formeinrichtungen geformt und gebildet werden, auf die jeweils erste Faserlagen aufgelegt werden. Die Felgenhörner werden zwischen (dem Ringüberzug) der Ringeinrichtung und den (Formüberzügen der) Formeinrichtungen ausgebildet. Wenigstens eine der Anlageflächen des Felgenhorns ist elastischer ausgebildet. Dadurch kann eine homogene, reproduzierbare und vollflächige Anlage der Faserlagen an die Formeinrichtungen der Werkzeugeinrichtung gewährleistet werden.

Dadurch, dass sich die vollständige sichtbare äußere Oberfläche der fertigen Felge durch unmittelbar an den Formeinrichtungen der Werkzeugeinrichtung anliegenden Flächen ergibt, kann die Oberflächenqualität der Felgenflanken erheblich verbessert werden. Es kann die Anzahl von Lufteinschlüssen und anderen Defekten stark reduziert werden, sodass die Ausschussquote deutlich reduziert werden kann. Der Prozess ist weniger fehleranfällig. Auch ein Faserverzug an den Faserlagen kann verringert und weitgehend vermieden werden, wodurch die Qualität und die Stabilität der derart hergestellten Felge steigen. Die Lage und Orientierung der Fasern in den äußeren Faserlagen ist jederzeit definiert, was die Stabilität und die Optik verbessert.

Durch die verbesserte Optik der hergestellten Felge ergibt sich somit die Möglichkeit, die Felge aus der Form heraus (englisch: "Out of the Mold") herzustellen. Durch die klar definierte Form und Lage der Faserlagen und der Fasern darin, können Fehlstellen in der ausgehärteten Felge stark verringert werden.

Im Stand der Technik sind hingegen Verfahren bekannt, bei denen zunächst Faserlagen in ein Hilfswerkzeug eingelegt werden. Ein so vorgeformtes Faserlagenbündel wird dann in die eigentliche Werkzeugform übertragen und dort eingelegt. Bei der Übertragung der Faserlagen können sich einzelne Fasern und Faserlagen verschieben, sodass die Lage und Form der einzelnen Faserlagen nicht immer reproduzierbar ist. Das Verfahren wird aber unter anderem deshalb bislang so durchgeführt, da die eigentliche Werkzeugform so schwer ist, dass sie nicht ohne Weiteres durch eine Person (oder mehrere Personen) manuell transportierbar ist. Bei der Erfindung sind die einzelnen Teile der Werkzeugeinrichtung hingegen jeweils problemlos separat durch eine einzelne Person transportierbar. Deshalb kann das Auflegen jedenfalls der Sichtlagen und auch von den Verstärkungslagen direkt in die Form erfolgen.

Vorzugsweise werden die Faserlagen in die Werkzeugeinheiten eingelegt und die an der fertigen Felge sichtbaren Außenlagen werden direkt an die Werkzeugeinheiten angedrückt. Vorzugsweise bilden die jeweiligen Formeinrichtungen jeweils vollständig den sichtbaren Bereich der Felgenflanken aus. Die Ringeinrichtung bildet vorzugsweise den sichtbaren Bereich des Felgenbettes aus.

In einer bevorzugten Weiterbildung werden die Faserlagen an die Formeinrichtungen der Werkzeugeinrichtung angedrückt, um einen vollflächigen Kontakt zwischen den Faserlagen und den Flankenkontaktflächen zu gewährleisten. Dadurch können Lufteinschlüsse und Fehlstellen vermieden und somit die Qualität erhöht werden.

In besonders bevorzugten Weiterbildungen werden alle Faserlagen, die als Sichtlagen im bestimmungsgemäßen Gebrauch die sichtbaren Außenflächen bilden an die Formeinrichtungen und die Ringeinrichtung der Werkzeugeinrichtung angedrückt, um einen vollflächigen Kontakt zwischen den Faserlagen und den Flankenkontaktflächen zu gewährleisten. Dadurch können Struktur und Qualität verbessert werden.

Ein Nacharbeiten der sichtbaren Oberfläche und insbesondere ein Nachlackieren der äußeren Oberfläche zur Verdeckung von Lufteinschlüssen und anderen Fehlstellen kann vermieden werden. Dadurch ergibt sich ein besonders vorteilhaftes Verfahren. Dadurch, dass eine Nachlackierung der sichtbaren Oberflächen nicht nötig ist, kann ein weiterer Verfahrensschritt eingespart werden, wodurch die Kosten reduziert werden. Ein anderer erheblicher Vorteil ist, dass das Gesamtgewicht der Felge reduziert werden kann, da das Gewicht für die aufgetragene Schicht entfällt.

In besonders vorteilhaften Ausgestaltungen wird ein Hilfsformteil der Werkzeugeinrichtung verwendet. Dabei wird ein zu der ausgewählten Formeinrichtung passendes Hilfsformteil der Werkzeugeinrichtung mit der zuvor ausgewählten Formeinrichtung verbunden, sodass die (ausgewählte) Formeinrichtung zusammen mit dem Hilfsformteil eine um eine Symmetrieachse der Felge umlaufende (gemeinsame) Formfläche für den Felgenboden bildet. Die Formfläche für den Felgenboden wird bereichsweise auf der ausgewählten Formeinrichtung und bereichsweise auf dem Hilfsformteil ausgebildet.

Bei dieser Ausgestaltung wird die erste Faserlage nicht nur auf die Flankenkontaktfläche der ausgewählten Formeinrichtung aufgebracht, sondern die erste Faserlage wird (einstückig) auch auf den Felgenbodenbereich des Hilfsformteils aufgebracht, um im Bereich des Felgenbodens eine durchgängige erste Faserlage zu bilden. Diese durchgängige erste Faserlage erstreckt sich nicht nur über den Felgenbodenbereich der (ausgewählten) Formeinrichtung, sondern auch über den Felgenbodenbereich bzw. Felgenbodenformbereich des Hilfsformteils. So wird die erste Faserlage vorzugsweise durchgehend auf die Flankenkontaktfläche der ausgewählten Formeinrichtung und auf den Felgenbodenbereich des Hilfsformteils aufgebracht, sodass im Bereich des Felgenbodens eine durchgängige und einstückige erste Faserlage zur Verfügung gestellt wird. Durch diese Weiterbildungen wird eine besonders stabile und hochwertige Felge hergestellt.

In bevorzugten Weiterbildungen wird das Hilfsformteil anschließend von der ausgewählten Formeinrichtung entfernt und es werden (unmittelbar danach oder vorzugsweise später) die beiden mit Faserlagen belegten Formeinrichtungen miteinander verbunden. Das Entfernen des Hilfsformteils erfolgt insbesondere so vorsichtig, dass die drapierten Faserlagen in dem Bereich des Felgenbodens (in etwa oder wenigstens im Wesentlichen) ihre Form behalten. Die im Bereich des Felgenbodens von der ausgewählten Formeinrichtung überstehenden Abschnitte der Faserlagen bilden zusammen mit den auf die andere Formeinrichtung aufgelegten Faserlagen die andere Felgenflanke. Die "überstehenden" Abschnitte bilden aber an der fertigen Felge keine Sichtfläche aus.

Es ist bevorzugt, dass nach dem Entfernen des Hilfsformteils zunächst die Ringeinrichtung angelegt wird, und dass danach die andere Formeinrichtung angelegt wird.

In einfachen Ausgestaltungen wird die ausgewählte Formeinrichtung zum Belegen mit Faserlagen auf einen zum Beispiel horizontalen Tisch gelegt und es wird die erste Faserlage und es werden gegebenenfalls weitere Faserlagen auf die Flankenkontaktfläche der ausgewählten Formeinrichtung und gegebenenfalls das Hilfsformteil aufgelegt und an die jeweiligen Kontaktflächen angedrückt. Parallel oder danach oder davor wird die andere Formeinrichtung beispielsweise auf einen z. B. horizontalen Tisch aufgelegt und es wird die andere Formeinrichtung mit einer ersten Faserlage belegt und es werden gegebenenfalls weitere Faserlagen auf die andere Formeinrichtung aufgelegt.

Parallel dazu oder davor oder danach kann die Ringeinrichtung mit den entsprechenden Faserlagen belegt werden. Nach dem Entfernen des Hilfsformteils wird die Ringeinrichtung mit den auf die Felgenbettkontaktfläche aufgebrachten Faserlagen auf die ausgewählte Formeinrichtung aufgelegt. Anschließend bzw. danach kann die andere Formeinrichtung mit den aufgelegten Faserlagen auf die ausgewählte Formeinrichtung und die Ringeinrichtung aufgelegt werden. Bei dieser Ausgestaltung werden die Formeinrichtungen jeweils schrittweise auf einen horizontalen Tisch aufgelegt. Möglich ist es aber auch, dass der Tisch unter einem Winkel zur Horizontalen geneigt angeordnet ist, oder, dass die Formeinrichtungen senkrecht im Raum positioniert werden und die Faserlagen von der Seite an die entsprechenden Formeinrichtungen angedrückt werden.

In bevorzugten Weiterbildungen bildet die auf die ausgewählte Formeinrichtung aufgebrachte erste Faserlage im Bereich der Flankenkontaktfläche die Sichtlage mit der Sichtfläche der zugehörigen Felgenflanke und im Felgenbodenbereich des Hilfsformteils eine Verstärkungslage des Felgenbodens und nicht die Sichtlage mit der Sichtfläche der anderen Felgenflanke. Dadurch wird eine vorteilhafte Verbindung der beiden Hälften erreicht. Die beiden Hälften der Felge können symmetrisch oder asymmetrisch ausgebildet sein.

Vorzugsweise wird der sichtbare Felgenboden durch die radial inneren Bereiche der Felgenflanken bzw. durch die radial inneren Bereiche der ersten Faserlagen gebildet, die auf die ausgewählte Formeinrichtung bzw. die andere Formeinrichtung aufgebracht werden.

In vorteilhaften Ausgestaltungen weisen die beiden Formeinrichtungen und das Hilfsformteil jeweils eine senkrecht zu einer Symmetrieachse der Felge verlaufende Trennfläche auf. An der Trennfläche können die Formeinrichtungen und das Hilfsformteil jeweils wahlweise aneinander angelegt werden. So wird vorzugsweise zunächst das Hilfsformteil an die ausgewählte Formeinrichtung angelegt und nach dem Auflegen der entsprechenden Faserlagen wieder entfernt. Anschließend wird die andere Formeinrichtung mit der zugehörigen Trennfläche an die Trennfläche der ausgewählten Formeinrichtung angelegt.

Vorzugsweise wird in die miteinander verbundenen Formeinrichtungen wenigstens eine Verstärkungslage (wenigstens in dem Bereich des Felgenbodens) eingebracht.

Besonders bevorzugt ist eine Reihenfolge der Verfahrensschritte, bei der auf die ausgewählte Formeinrichtung das Hilfsformteil aufgelegt wird, nach dem Aufbringen erster Faserlagen das Hilfsformteil entfernt und die Ringeinrichtung mit den zuvor darauf aufgelegten Faserlagen aufgelegt wird. Schließlich wird die andere Formeinrichtung mit den darauf aufgebrachten bzw. aufgelegten Faserlagen aufgelegt.

In allen Ausgestaltungen werden Felgenhörner an den beiden Felgenflanken ausgebildet. Insbesondere wird wenigstens ein Felgenhorn wenigstens teilweise durch Faserlagen gebildet, welche auf eine der Formeinrichtungen und auf die Ringeinrichtung aufgebracht sind. Das bedeutet, dass vorzugsweise ein Felgenhorn sowohl durch auf eine Formeinrichtung aufgebrachte Faserlagen als auch durch auf die Ringeinrichtung aufgebrachte Faserlagen gebildet wird. Das erhöht die Stabilität.

In vorteilhaften Weiterbildungen wird in dem Kreuzungsbereich von dem Felgenbett und der Felgenflanke wenigstens ein Faserstrang zur Verstärkung eingelegt. Ein solcher Faserstrang kann aus einer Mehrzahl von Filamenten oder aus einem Bündel von Filamenten bestehen oder solche Filamente umfassen. Möglich ist es auch, dass zum Beispiel zu einem Zopf geflochtene Filamente oder zu einer Schnur verbundene oder um einander gedrehte Filamente als Faserstrang eingesetzt werden. Solche eingelegten Faserstränge können die Kreuzungsbereiche von Felgenbett und Felgenflanke und dem Felgenhorn verstärken.

In allen Ausgestaltungen ist es bevorzugt, dass die Ringeinrichtung in Umfangsrichtung wenigstens zwei und insbesondere drei oder mehr Ringsegmente umfasst. Besonders bevorzugt sind in Umfangsrichtung drei Ringsegmente vorhanden. Möglich ist es auch, nur zwei Ringsegmente zu verwenden, die sich dann über einen Winkel von jeweils 180° erstrecken. Bevorzugt werden drei Ringsegmente verwendet, sodass sich jedes einzelne Ringsegment über einen Umfangswinkel von deutlich kleiner als 180° erstreckt. Bevorzugt sind die Ringsegmente gleich ausgestaltet, sodass bei drei Ringsegmenten jedes vorzugsweise ein Winkelbereich von 120° abdeckt. Denkbar ist auch, dass die einzelnen Ringsegmente sich über unterschiedliche Winkelbereiche erstrecken. Insgesamt erstrecken sich die Ringsegmente über den vollständigen Umfang.

Vorzugsweise umfasst die Ringeinrichtung in axialer Richtung (parallel zur Symmetrieachse der Felge) quer zu der Umfangsrichtung wenigstens zwei und insbesondere drei oder mehr Ringsegmente. So ist es möglich, dass die Ringeinrichtung insgesamt aus neun Ringsegmenten besteht. Jeweils drei Ringsegmente ergeben einen Ring. Die drei Ringe (mit jeweils drei Ringsegmenten) sind in axialer Richtung nacheinander angeordnet. Die Ringsegmente können in axialer Richtung versetzt zueinander angeordnet sein. Die Ringsegmente bilden insgesamt die Ringeinrichtung, die radial innen die Felgenbettkontaktfläche ausbildet.

Die axial mittleren Ringsegmente können insbesondere keilförmig ausgebildet sein. Dadurch wird es möglich, dass die mittleren Ringsegmente nach der Herstellung zunächst entnommen werden können. Anschließend können die anderen Ringsegmente entnommen werden, die beispielsweise einen Hinterschnitt an den Felgenhörnern ausbilden, um radial nach innen überstehende Enden der Felgenhörner zur Verfügung zu stellen.

Denkbar ist es aber auch, dass die axial mittleren Ringsegmente insgesamt einen scheibenförmigen Ring und keine Keilform ausbilden. Auch dann können die axial äußeren Ringsegmente einen Hinterschnitt an den Felgenhörnern ausbilden.

In vorteilhaften Ausgestaltungen ist ein Schließring vorgesehen, der außen um die miteinander verbundenen Formeinrichtungen und die Ringeinrichtung gelegt wird. Der Schließring kann radial von außen angelegt werden und den Zusammenhalt der Komponenten untereinander verstärken. Der Schließring kann insofern auch als äußerer Klemmring bezeichnet werden. Möglich ist es auch, dass auf einen Schließring verzichtet wird, insbesondere wenn die Formeinrichtungen und die Ringeinrichtung anderweitig miteinander verbunden werden.

Vorzugsweise wird die mit den Faserlagen bestückte Werkzeugeinrichtung vor dem Aushärten evakuiert. Besonders bevorzugt wird die Werkzeugeinrichtung in eine Presseinrichtung eingebracht und/oder beheizt. Dadurch kann die Verfestigung bzw. das Aushärten des Faserverbundwerkstoffs unterstützt werden.

In allen Ausgestaltungen ist es besonders bevorzugt, dass mit wenigstens einem Harz getränkte Faserlagen verwendet werden. Solche mit Matrixmaterial (insbesondere Harz) versehenen oder getränkten Faserlagen können auch als Prepregs bezeichnet werden und weisen vorzugsweise eine zur Aushärtung (wenigstens im Wesentlichen) genügende Menge an Matrixmaterial (und vorzugsweise an Harz) auf. Besonders vorteilhaft ist der Einsatz von Prepregs. Denkbar ist es auch, dass Matrixmaterial oder Harzmaterial in die fertig bestückte Werkzeugeinrichtung (zusätzlich) eingebracht wird. Beispielsweise kann Matrixmaterial oder Harzmaterial eingespritzt oder eingesaugt werden. Möglich ist es auch, dass Faserlagen, Fasermatten, Gewebematten oder dergleichen als Prepregs verwendet werden und zusätzlich noch (etwas) Harzmaterial eingebracht wird.

In allen Ausgestaltungen ist es bevorzugt, dass ein aufblasbarer Schlauch (in den Bereich der späteren Hohlkammer) eingelegt wird, bevor die Formeinrichtungen mit der Ringeinrichtung verbunden werden. Vorzugsweise wird der Schlauch nach dem Befestigen der Formeinrichtungen mit der Ringeinrichtung aufgeblasen. Eine Verbindung nach außen zum Aufblasen bildet zum Beispiel die spätere Ventilöffnung. Dadurch kann der Schlauch später entnommen werden.

Es ist bevorzugt, dass nach der Entnahme der Felge aus der Werkzeugeinrichtung Speichenlöcher eingebracht werden.

Eine erfindungsgemäße Felge für wenigstens teilweise muskelbetriebene Fahrzeuge und insbesondere Fahrräder weist gegenüberliegende Felgenflanken, ein Felgenbett und einen Felgenboden und an den (radial äußeren Enden der) Felgenflanken ausgebildete Felgenhörner auf. An dem radial innersten Punkt treffen sich insbesondere die Felgenflanken. Die Felge wird aus wenigstens einem Faserverbundwerkstoff mit einem zuvor beschriebenen Verfahren unter Verwendung einer zuvor beschriebenen Werkzeugeinrichtung hergestellt. In einer bevorzugten Weiterbildung besteht die im bestimmungsgemäßen Betrieb sichtbare äußere Oberfläche wenigstens überwiegend oder vollständig aus dem wenigstens einen Faserverbundwerkstoff. Das gilt abgesehen von etwaigen Felgenösen und Typangaben und z. B. im Vergleich zur Felgenoberfläche kleinen Aufklebern, wobei der Faktor der Fläche von zum Beispiel Aufklebern zur Felgenoberfläche kleiner 1/5 oder 1/10 oder 1/100 beträgt.

Die erfindungsgemäße Felge ist sehr vorteilhaft und bietet auch ohne Nachbearbeitung der äußeren Oberfläche und insbesondere ohne Lackierung der äußeren Oberfläche eine hohe Oberflächengüte und eine reproduzierbare und hohe Qualität.

In allen Ausgestaltungen ist eine mit der Werkzeugeinrichtung und/oder dem beschriebenen Verfahren hergestellte Felge insbesondere für mit einer Scheibenbremse ausgerüstete Laufräder vorgesehen und benötigt insbesondere keine Bremsflanke.

Insbesondere ist bzw. wird die Felge bauchig ausgebildet. Die Felge kann ein V- oder U-Form aufweisen. Vorzugsweise liegt eine breitestete Stelle der Felge zwischen dem radialen äußeren Ende der Felge (an den Felgenhörnern) und einem radiale inneren Ende an dem Felgenbett. Dazu ist die Werkzeugeinrichtung vorzugsweise entsprechend bauchig ausgebildet.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Mountainbikes mit anmeldungsgemäßen Felgen;
- Figur 2: eine schematische Darstellung eines Rennrades mit anmeldungsgemäßen Felgen;
- Figur 3: eine schematische Gesamtansicht einer anmeldungsgemäßen Werkzeugeinrichtung zur Herstellung einer anmeldungsgemäßen Felge;
- Figur 4: eine Explosionsdarstellung der verschiedenen Komponenten der Werkzeugeinrichtung nach Figur 3;
- Figur 5: eine Formeinrichtung und ein Hilfsformteil der Werkzeugeinrichtung nach Figur 4;
- Figur 6: zwei geschnittene Darstellungen der Werkzeugeinrichtung bei der Herstellung einer Felge;
- Figur 7: eine fertige anmeldungsgemäße Felge;
- Figur 8: geschnittene Darstellungen der Werkzeugeinrichtung und der Faserlagen einer Felge bei der Durchführung des anmeldungsgemäßen Verfahrens;
- Figuren 9-12: verschiedene Schnittdarstellungen bei der Herstellung anmeldungsgemäßer Felgen; und
- Figur 13: eine schematische Draufsicht auf die Ringeinrichtung der Werkzeugeinrichtung nach Figur 3.

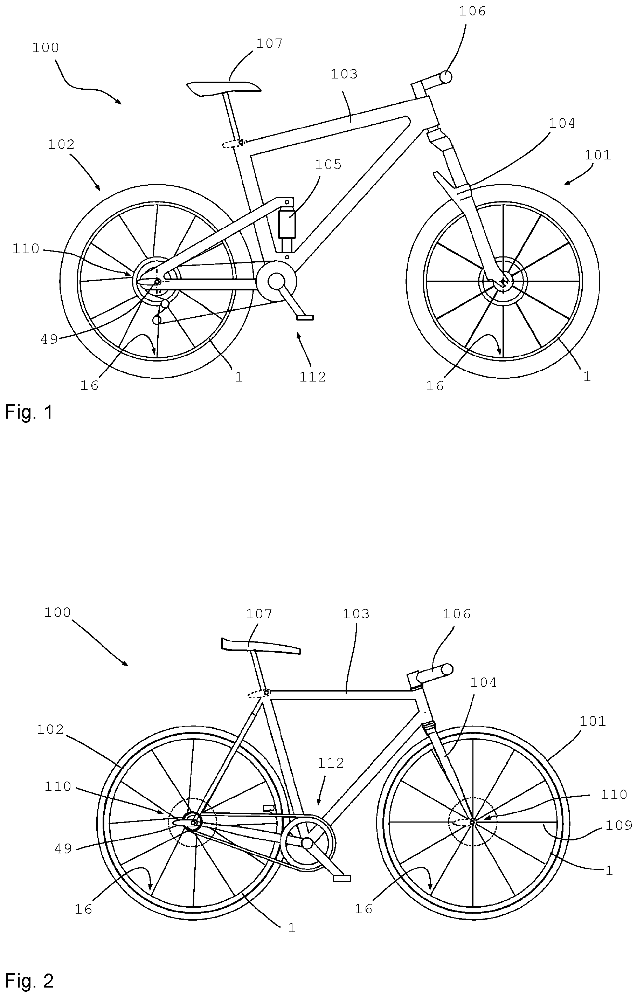

In den Figuren 1 und 2 sind jeweils ein Mountainbike bzw. ein Rennrad 100 dargestellt, die jeweils mit anmeldungsgemäßen Felgen 1 ausgerüstet sind. Das Mountainbike bzw. Rennrad 100 verfügt jeweils über ein Vorderrad 101 und ein Hinterrad 102, an denen jeweils anmeldungsgemäße Felgen 1 eingesetzt sind. Die beiden Räder 101, 102 verfügen über Speichen 109, um die Felge 1 mit den Naben 110 zu verbinden. An der Felge 1 sind dazu Speichenlöcher 16 vorgesehen.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und oder den Rädern vorgesehen sein. Die Nabe 110 der Räder kann jeweils über ein Spannsystem 49 (zum Beispiel eine Steckachse oder einen Schnellspanner) an dem Rahmen befestigt sein.

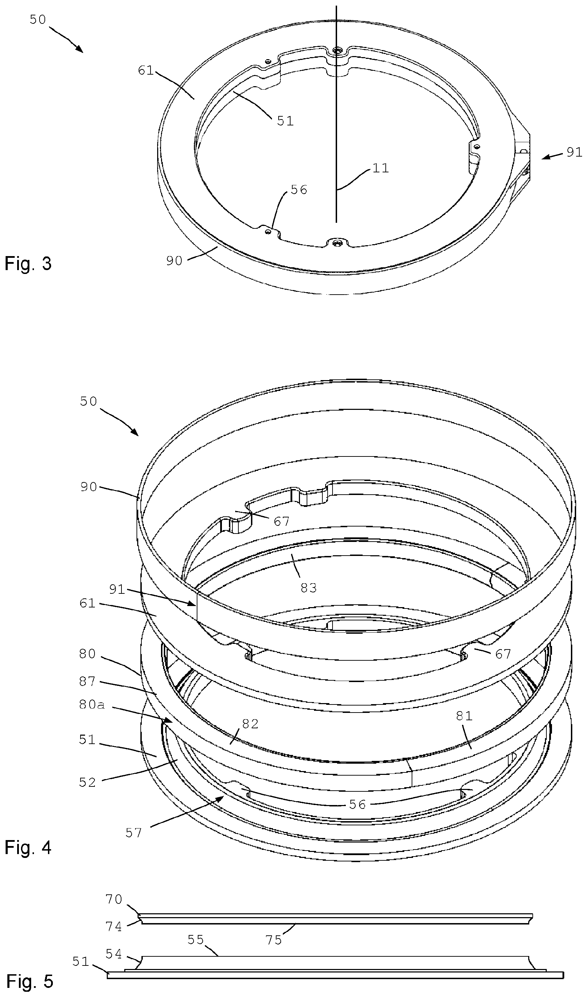

Figur 3 zeigt die Werkzeugeinrichtung 50 im zusammengebauten Zustand mit schon eingelegten Faserlagen zur Herstellung der Felge 1, bevor die Werkzeugeinrichtung 50 in eine separate Presseinrichtung eingelegt wird, in der die Werkzeugeinrichtung 50 auch beheizt wird, um das Aushärten des Faserverbundwerkstoffs zu beschleunigen. Die Werkzeugeinrichtung 50 ist im Wesentlichen rotationssymmetrisch um eine Symmetrieachse 11 ausgebildet, die jedenfalls eine Symmetrieachse für die fertige Felge 1 bildet.

Figur 4 zeigt eine Explosionsdarstellung der Werkzeugeinrichtung 50, wobei zuoberst ein Schließring 90 abgebildet ist, der über einen Klemmabschnitt 91 und eine hier nicht sichtbare Schraube verfügt. Der Schließring 90 kann um die weiteren Komponenten der Werkzeugeinrichtung 50 gelegt werden und kann als Klemmring dienen. Gegebenenfalls kann auf diesen Schließring 90 verzichtet werden.

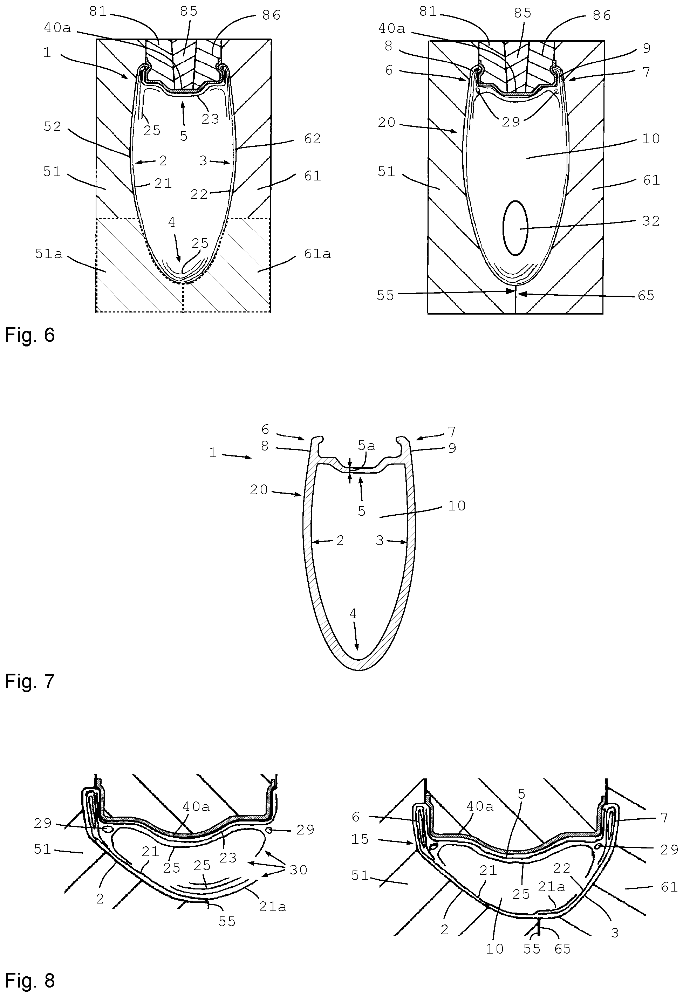

Als unterstes Element ist eine Formeinrichtung 51 zu sehen, die eine Flankenkontaktfläche 52 aufweist, die zur Ausbildung einer der beiden Felgenflanken der herzustellenden Felge 1 dient. An der Formeinrichtung 51 sind Befestigungsmittel 56 und Ausrichteinheiten 57 ausgebildet oder angeordnet, mit der die Formeinrichtung 51 mit der Ringeinrichtung 80 und der anderen Formeinrichtung 61 über entsprechende Befestigungsmittel 56 oder an den Ausrichteinheiten 57 befestigt wird. Die Ringeinrichtung 80 umfasst eine Ringeinheit 80a und insbesondere einen Ringüberzug 40a (vgl. Fig. 6) und weist Ausrichteinheiten 87 auf.

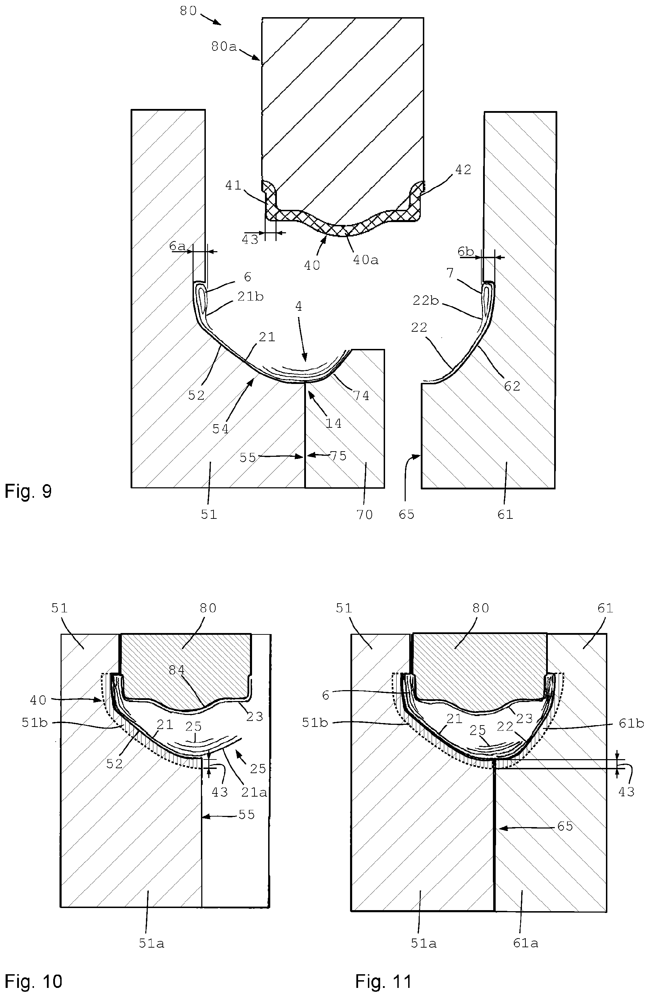

Auch die andere Formeinrichtung 61 weist Ausrichteinheiten 67 auf. Beide Formeinrichtungen 51, 61 können jeweils aus einer Formeinheit 51a, 61a (als Kern) und einem Formüberzug 51b, 61b bestehen (vgl. Figur 11).

Wie in Figur 4 zu erkennen, besteht die Ringeinheit 80a der Ringeinrichtung 80 aus mehreren Ringsegmenten 81-83 die sich in Umfangsrichtung um die zentrale Symmetrieachse 11 herum erstrecken. Dadurch können die Ringsegmente bei der Entnahme einzeln entnommen werden.

Figur 5 zeigt eine Formeinrichtung 51 und das zugehörige Hilfsformteil 70, die miteinander verbunden werden, um die Flankenkontaktfläche 72 und die Felgenbodenbereiche 54 und 74 mit Faserlagen des Faserverbundwerkstoffs zu belegen. Dadurch wird der Bereich des Felgenbodens durch eine gemeinsame durchgehende Lage verstärkt.

Die Formeinrichtung 61 und das Hilfsformteil 70 werden an den Trennflächen 55 und 75 miteinander verbunden bzw. aufeinandergelegt.

Figur 6 zeigt zwei schematische Darstellungen der Werkzeugeinrichtung 50 mit darin angeordneten Faserlagen 21-23 und 25. Die Werkzeugeinrichtung besteht im zusammengebauten Zustand im Wesentlichen aus einer ersten Formeinrichtung 51, einer zweiten Formeinrichtung 61 und der Ringeinrichtung 80, die wiederum eine Ringeinheit 80a mit (in Umfangsrichtung) mehreren Ringsegmenten 81-83 (vergleiche Figur 4) und (in axialer Richtung) Ringsegmenten 85, 86 und einen Ringüberzug 40a umfasst.

Der Ringüberzug 40a besteht aus einem elastischeren Material als die Ringeinheit 80a (Kern von 80) und die Formeinrichtungen 51, 61 oder deren Formeinheiten 51a, 61a (Kerne von 51, 61). Dadurch werden die Bereiche der Felgenhörner beim Aushärten in der Werkzeugeinrichtung 50 auf einer Seite durch ein elastischeres Material (Ringüberzug 40a) und auf der anderen Seite durch ein weniger elastischeres Material an den Formeinrichtungen 51, 61 bzw. der Ringeinheit 80a gepresst. Durch die Wärmeentwicklung bei dem Aushärten und die thermische Ausdehnung wird der Druck noch erhöht. Der Ringüberzug 40a besteht insbesondere aus einem Gummimaterial oder gummiähnlichen Material oder vorzugsweise aus einem Silikon oder dergleichen oder aus einer Kombination. Die Ringeinheit 80a und die Formeinrichtungen 51, 61 werden vorzugsweise aus Metall und insbesondere Leichtmetall gefertigt.

Hier deckt der Ringüberzug 40a auch den Bereich des Felgenbettes 5 ab, welches beim Aushärten von innen durch den (aufblasbaren) Schlauch 32 mit Druck beaufschlagt wird. Von außen wirkt der Ringüberzug 40a dagegen.

Gegebenenfalls können die Formeinrichtungen 51 und 61 auch mehrteilig ausgebildet sein und beispielsweise zusätzlich Formeinheiten (Formkerne) 51a und 61a umfassen. Vorzugsweise sind die Formeinrichtungen 51 und 61 aber jeweils einteilig ausgebildet, wobei gegebenenfalls aber separate Formüberzüge 51b, 61b vorhanden sein können (vgl. Figur 11). Die Formeinrichtung 51 weist eine Flankenkontaktfläche 52 für die linke Felgenflanke 2 auf, während die rechte Felgenflanke 3 durch eine Flankenkontaktfläche 62 geformt wird. Auf die Flankenkontaktflächen 52 bzw. 62 sind Faserlagen 21 bzw. 22 aufgelegt. Im Bereich des Felgenbodens 4 sind noch Verstärkungslagen 25 aufgebracht. Das Felgenbett 5 wird durch wenigstens einer Faserlage 23 gebildet, die radial innen auf die Ringeinrichtung 80 aufgetragen wird.

Die beiden in Figur 6 dargestellten Felgen 1 verfügen jeweils über Felgenhörner 6, 7, die durch Faserlagen 21, 23 und 25 ausgebildet werden. Die später von außen seitlich sichtbaren Außenflächen 8 bzw. 9 der beiden Felgenflanken 2, 3 werden jeweils durch die erste auf die Flankenkontaktfläche 52 aufgelegte Faserlage 21 bzw. durch die erste auf die Flankenkontaktfläche 62 aufgelegte erste Faserlage 22 gebildet. Der Sichtbereich des Felgenbettes wird durch die erste Faserlage 23 geformt, die auf die Ringeinrichtung 80 aufgelegt wurde. In der geschlossenen Werkzeugeinrichtung wird durch den elastischen Ringüberzug 40a Druck auf die Felgenhörner ausgeübt.

Alle Sichtflächen bzw. alle Sichtlagen der fertigen Felge 1 werden somit durch die Faserlagen 21-23 zur Verfügung gestellt, die jeweils separat und vollflächig auf die Formeinrichtungen 51 bzw. 61 und den Ringüberzug 40a der Ringeinrichtung 80 aufgelegt werden. Dadurch kann eine besonders hohe Oberflächenqualität erreicht werden, da Lufteinschlüsse oder sonstige Fehlstellen besser vermieden können, als im Stand der Technik.

Um von innen während des Aushärtens Druck ausüben zu können, wird regelmäßig ein (nur schematisch eingezeichneter) Schlauch 32 eingelegt, der über die spätere Ventilöffnung nach außen geführt werden kann und der nach dem Schließen der Werkzeugform (Werkzeugeinrichtung 50) mit Druck beaufschlagt werden kann, um die einzelnen Faserlagen 21-25 von innen gegen die Innenwandungen der Werkzeugeinrichtung 50 zu pressen. Dadurch kann ein zuverlässiger Verbund gesichert werden. Der Schlauch 32 kann elastisch ausgebildet sein und sich beim Aufpumpen ausdehnen. Möglich und bevorzugt ist es auch, dass der Schlauch 32 groß genug oder passend groß ausgebildet ist und beim Einlegen vollflächig auf wenigstens eine Flankenkontaktfläche und radial von innen vollflächig auf die Ringeinrichtung aufgelegt wird.

Gegebenenfalls ist es möglich, wie in dem rechten Teil von Figur 6 zu erkennen, dass umlaufende Faserstränge oder Faserbündel 29 in dem Schnittbereich von Felgenflanke 2, 3 und Felgenbett 5 eingelegt werden, um die Bereiche dort zu verstärken und noch stabiler zu gestalten.

Figur 7 zeigt eine schematische Darstellung einer fertigen Felge 1, die einen Felgenboden 4, ein Felgenbett 5 und Felgenflanken 2, 3 mit daran ausgebildeten Felgenhörnern 6, 7 umfasst. Im Inneren ist eine Hohlkammer 10 zu sehen. Die Felge 1 wird mit einem anmeldungsgemäßen Verfahren und einer anmeldungsgemäßen Werkzeugeinrichtung aus wenigstens einem Faserverbundwerkstoff hergestellt. In Figur 7 ist auch die minimale Wandstärke 5a des Felgenbodens 5 eingezeichnet.

Figur 8 zeigt zwei schematische Darstellungen bei der Herstellung. Dargestellt ist jeweils eine stark schematische Darstellung der Faserlagen in einer Werkzeugeinrichtung 50, wobei der Verlauf und die Lage der Faserlagen 21-23 und 25 absichtlich grob skizziert sind, um den Verlauf der einzelnen Faserlagen anschaulich zu erläutern. Hier ist in der rechten Abbildung von Figur 8 erkennbar, dass die Faserlage 21 nicht nur auf die Flankenkontaktfläche 52 der Formeinrichtung 51 aufgelegt wurde, sondern auch auf den Felgenbodenbereich 74 des Hilfsformteils 70, um in dem Bereich der Felgenbettkontaktfläche 62 der anderen Formeinrichtung 61 einen Verstärkungsabschnitt 21a zu bilden. Dadurch wird im Bereich des Felgenbodens ein Überlapp der einzelnen Faserlagen von der einen Felgenflanke zu der anderen Felgenflanke ermöglicht.

Es sind schematisch umlaufende Faserstränge 29 in dem Kreuzungsbereich 15 von den Felgenhörnern 6, 7 mit dem Felgenbett 5 bzw. den Felgenflanken 2, 3 zu erkennen.

Im unteren Bereich sind die Trennflächen 55 und 65 der beiden Formeinrichtungen 51 und 61 zu erkennen, an denen die beiden Formeinrichtungen 51 und 61 aneinandergefügt werden.

Figur 8 zeigt links eine Vorstufe bei der Fertigung der weiter rechts abgebildeten Felge 1. In Figur 8 ist in der linken Abbildung der Zustand dargestellt, nachdem die ausgewählte Formeinrichtung 51 mit dem Hilfsformteil 70 verbunden und darauf Faserlagen 21 und Verstärkungslagen 25 aufgelegt wurden und nachdem anschließend das Hilfsformteil 70 entfernt wurde und die Ringeinrichtung 80 mit der Ringeinheit 80a und dem Ringüberzug 40a auf die ausgewählte Formeinrichtung 51 aufgelegt wurde.

Dann ergibt sich die in Figur 8 links zu erkennende Lagenstruktur, wobei aufgrund der Eigensteifigkeit der verwendeten Prepregs 30 (als Faserlagen 21-23 und 25) der überstehende Verstärkungsabschnitt 21a und die entsprechenden überstehenden Bereiche der Faserlagen 25 (im Wesentlichen) ihre Form behalten. Im Anschluss daran kann die andere Formeinrichtung 61 auf die (ausgewählte) Formeinrichtung 51 und die Ringeinrichtung 80 aufgelegt werden, sodass sich insgesamt ein geschlossenes Felgenprofil für die Felge 1 ergibt. Dabei wird dann im Bereich des Felgenhorns 7 die auf die Formeinrichtung 61 aufgelegte Faserlage 22 gegen die Faserlage 23 an dem Ringüberzug 40a der Ringeinrichtung 80 gedrückt. Im Bereich des Felgenbodens wird die Faserlage 22 gegen den Verstärkungsabschnitt 21 gedrückt. Der im weiteren Verlauf im Inneren der Hohlkammer 10 der Felge 1 aufgepumpte Schlauch 32 drückt dann alle Lagen zuverlässig aneinander und nach außen an die Formeinrichtungen 51 und 62 und den Ringüberzug 40a der Ringeinrichtung 80 an.

Die optisch besonders wichtigen Außenflächen der fertigen Felge werden hochwertig ausgebildet, da die jeweilig äußeren Faserlagen 21, 22 und 23, die die Sichtlagen der fertigen Felge 1 bilden, jeweils vollflächig und separat an die entsprechenden Kontaktflächen (Flankenkontaktflächen 52, 62 und Felgenbettkontaktfläche 84) angedrückt wurden Die Felgenhörner 6, 7 werden besonders hochwertig hergestellt, da durch den Ringüberzug 40a für einen passenden Druck gesorgt wird.

Figur 9 zeigt den Zustand bei der Herstellung einer Felge 1, nachdem eine erste Faserlage 21 auf die Felgenkontaktfläche 52 der ausgewählten Formeinrichtung 51 und den Felgenbodenbereich 74 des Hilfsformteils 70 aufgelegt wurde. Des weiteren wurden Verstärkungslagen 25 aufgelegt, die an der Formfläche 14 des Felgenbodens 4 anliegen und die entsprechende Form einnehmen. Im linken Teil von Figur 9 liegen die Trennflächen 55 und 75 der Formeinrichtung 51 und des Hilfsformteils 70 noch aneinander an.

Im radial äußeren Bereich ist zu erkennen, dass im Bereich des Felgenhorns 6 die Faserlage 21 umgeschlagen wurde und einen umgeschlagenen und radial nach innen verlaufenden Abschnitt 21b bildet, um das Felgenhorn 6 dort zu verstärken.

In entsprechender Weise wird auch die andere Formeinrichtung 61 mit Faserlagen 22 bestückt, wobei sich die Faserlage 22 nur über die Flankenkontaktfläche 62 erstreckt. Aber auch dort wird ein Abschnitt 22b im Bereich des Felgenhorns 7 umgeschlagen.

Im Anschluss wird das Hilfsformteil 70 vorsichtig entfernt und es wird die andere Formeinrichtung 61 mit der Trennfläche 65 an die Trennfläche 55 der (ausgewählten) Formeinrichtung 51 herangeführt und beide werden dort miteinander befestigt. Dies geschieht aber vorzugsweise erst nachdem die Ringeinrichtung 80 (in Figur 9 oben abgebildet) auf die ausgewählte Formeinrichtung 51 aufgelegt wurde (vgl. z. B. Figur 10).

Die Ringeinheit 80a der Ringeinrichtung 80 ist in den Kontaktbereichen mit der herzustellen Felge 1 mit einem Ringüberzug 40a (hier aus einem Silikonmaterial) ausgerüstet. Der Ringüberzug 40a kann in Umfangsrichtung einstückig ausgebildet sein oder aus mehreren Segmenten bestehen. Der elastische Ringüberzug 40a sorgt zuverlässig für einen ausreichenden Pressdruck.

Eine Wandstärke 43 bzw. Dicke des Ringüberzugs 40a ist eingezeichnet und entspricht hier etwa der Wandstärke 6a, 6b in dem Bereich der Felgenflanke 2, 3 oder des Felgenhorns 6, 7. Die Wandstärke 43 kann auch nur halb so groß wie eingezeichnet sein oder auch 2 mm, 3 mm, 4mm oder auch 5 mm oder 6 mm betragen. Wesentlich ist, dass eine ausreichende Formstabilität und Reproduzierbarkeit der Wandstärken und Oberflächenqualität der Felgen 1 erzielt wird. Allgemein formuliert liegt die Wandstärke 43 bzw. Dicke eines Überzugs 40 in dem Bereich der (minimalen oder maximalen) Wandstärke der Felge.

Insbesondere liegt die Wandstärke 43 in dem Bereich zwischen 1/8 (oder 1/10) und dem 8-fachen (oder dem 10-fachen) der minimalen Wandstärke 5a des Felgenbodens 5 und/oder kann bevorzugt zwischen 0,1 mm und 10 mm betragen. In besonders bevorzugten Ausgestaltungen liegt die Dicke 43 zwischen 1 mm und 6 mm und besonders bevorzugt z. B. bei 4 mm +/- 2 mm.

Figuren 10 und 11 zeigen verschiedene Verfahrensschritte bei der Herstellung einer anderen Felge mit einem anderen Lagenbild, wobei in Figur 10 der Zustand dargestellt ist, nachdem zuvor auf die Felgenkontaktfläche 52 und den Felgenbodenbereich 74 eines Hilfsformteils Faserlagen 21 und 25 aufgelegt wurden und das Hilfsformteil 70 wieder entfernt wurde. Der überstehende Abschnitt 21a verstärkt später den Felgenboden 4 in dem Bereich der Felgenflanke 3.

Gestrichelt und vertikal schraffiert eingezeichnet ist ein (optionaler) Formüberzug 51b auf der Formeinheit 51a. Der Formüberzug 51b besteht aus einem elastischeren Material als die Formeinheit 51a und z.B. aus einem gummiartigen Material oder einem Silikon oder dergleichen. Dadurch ist der Formüberzug 51b (etwas) komprimierbar und kann vorzugsweise seine Dicke bzw. Wandstärke bei der Herstellung um einige Prozente verringern. Möglich ist es, dass ein solcher Formüberzug 51b nur in dem Bereich der Felgenhörner vorgesehen ist. Der Formüberzug 51b kann alternativ oder ergänzend zu dem Ringüberzug 40a vorgesehen sein.

Figur 11 zeigt den nächsten Schritt bei der Herstellung der Felge 1 nach Figur 10, wobei die andere Formeinrichtung 61 auf die Ringeinrichtung 80 mit dem Ringüberzug 40a und die ausgewählte Formeinrichtung 51 aufgelegt wurde. Nun ist das hier beispielhaft eingezeichnete vollständige Lagenbild erkennbar.

Auch hier ist es optional möglich, dass die Formeinrichtung 61 eine Formeinheit 61a und einen Formüberzug 61b umfasst. Der Formüberzug 61b stellt dann die Flankenkontaktfläche 62 insgesamt oder im Bereich des Felgenhorns zur Verfügung.

Möglich ist es auch, dass die Formeinrichtung 61 eine Formeinheit 61a und einen Formüberzug 61b umfasst, und, dass die Ringeinrichtung 80 über keinen Ringüberzug 40a verfügt. Wenigstens in dem Bereich der Felgenhörner wird über den elastischeren Formüberzug Druck auf das Felgenhorn aufgebracht. Der Gegendruck wird dann von der Ringeinheit 80a direkt aufgebracht. Dann kann die Ringeinrichtung 80 nur aus der Ringeinheit 80a bestehen.

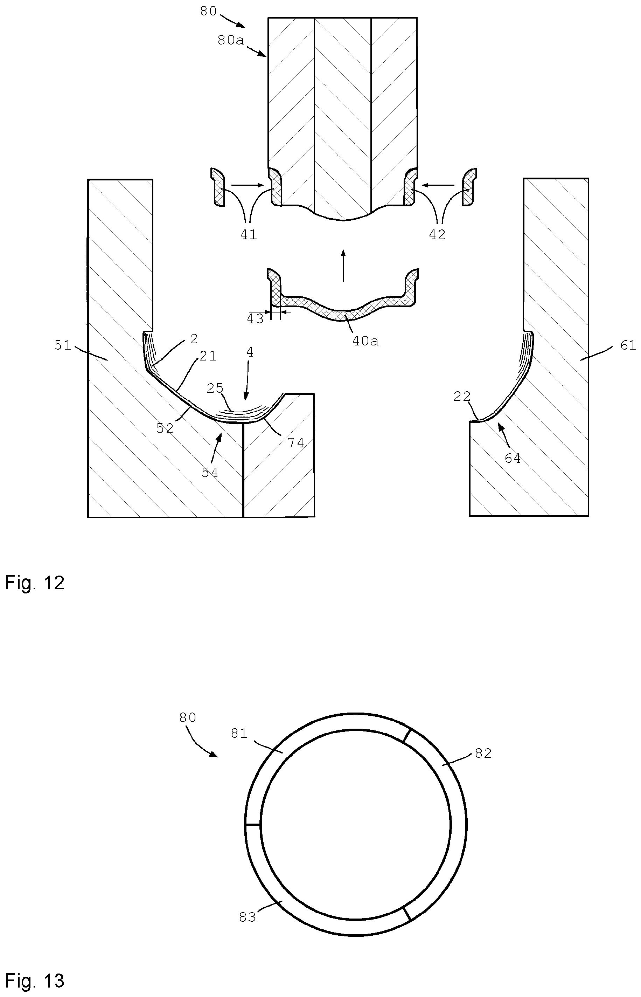

Figur 12 zeigt einen Zwischenschritt bei der Herstellung einer weiteren Felge 1, wobei im linken Bereich die Faserlagen 21 und 25 dargestellt sind, die auf die ausgewählte Formeinrichtung 51 und den Felgenbodenbereich 74 des Hilfsformteils 70 aufgelegt sind, während im rechten Teil von Figur 12 die Faserlage 22 und die anderen Faserlagen dargestellt sind, die auf die Flankenkontaktfläche 62 und den Felgenbodenbereich 64 aufgelegt sind.

An der Ringeinrichtung 80 bzw. der Ringeinheit 80a können - je nach konstruktiver Auslegung - zwei separate Ringüberzüge 41, 42 vorgesehen sein, die separat im Bereich der Felgenhörner 6, 7 montiert werden. Oder es wird ein vollständig durchgehender Ringüberzug 40a montiert, der beide Felgenhörner 6, 7 abdeckt. Über (lokal) unterschiedliche Wandstärken des Ringüberzugs 40a kann die Ringeinrichtung 80 auch gegebenenfalls an unterschiedlich breit herzustellenden Felgen Verwendung finden. Möglich ist es auch, drei oder mehr separate Ringüberzüge einzusetzen, z. B. Ringüberzüge 41 und 42 für die Felgenhörner und einen Ringüberzug 40a für das Felgenbett.

Figur 13 zeigt schließlich eine schematische Draufsicht auf die Ringeinrichtung 80, bei dem die drei umfänglich angeordneten Ringsegmente 81-83 erkennbar sind.

In allen Ausführungen können die verschiedenen Faserlagen unter unterschiedlichen Winkeln zueinander aufeinander aufgelegt werden. So können bei einer Lage die Fasern (Kettfäden oder Schussfäden eines Gewebes) unter 30°, 60° oder auch unter 45° zur Umfangsrichtung der fertigen Felge ausgerichtet sein. Bei einer darüber angeordneten Lage können die entsprechenden Fasern unter einem anderen Winkel (z. B. einem anderen der angeführten Winkel) ausgerichtet sein.

Auch in den Figuren 11 und 12 liegt die Wandstärke 43 bzw. Dicke 43 eines Überzugs 40 (also Ringüberzug 40a oder Formüberzug 51b oder 61b) zwischen 1/10 und dem 10-fachen der minimalen Wandstärke 5a des Felgenbodens und/oder kann zwischen 0,1 mm und 10 mm betragen. Auch hier liegt die Dicke 43 insbesondere zwischen 1 mm und 6 mm z. B. bei 4 mm +/- 2 mm.

Insgesamt stellt die Erfindung ein vorteilhaftes Verfahren und eine vorteilhafte Werkzeugeinrichtung zur Verfügung, womit Felgen 1 herstellbar sind, die eine hohe Qualität reproduzierbar aufweisen. Es ist möglich, ohne aufwendiges Nacharbeiten eine hohe Oberflächenqualität der äußeren sichtbaren Oberflächen zur Verfügung zu stellen. Eine zusätzliche Auftragung einer Lackschicht oder eine Lackierung oder dergleichen ist nicht nötig. Das wird unter anderem dadurch ermöglicht, dass die äußeren Sichtlagen aller äußeren Oberflächen unmittelbar und direkt an die entsprechenden Formflächen der Werkzeugeinrichtung angedrückt werden können.

Das Herstellverfahren ist einfach und ermöglicht dadurch die Vermeidung von Fehlern und verringert die Ausschussrate.

**Bezugszeichenliste:**

| | | | |
|---|---|---|---|
| 1 | Felge | 54 | Felgenbodenbereich |
| 2 | Felgenflanke | 55 | Trennfläche |
| 3 | Felgenflanke | 56 | Befestigungsmittel |
| 4 | Felgenboden | 57 | Ausrichteinheit |
| 5 | Felgenbett | 61 | Formeinrichtung |
| 6 | Felgenhorn | 61a | Formeinheit |
| 7 | Felgenhorn | 61b | Formüberzug |
| 8 | Sichtfläche | 62 | Flankenkontaktfläche |
| 9 | Sichtfläche | 64 | Felgenbodenbereich |
| 10 | Hohlkammer | 65 | Trennfläche |
| 11 | Symmetrieachse | 67 | Ausrichteinheit |
| 14 | Formfläche Felgenboden | 70 | Hilfsformteil |
| 15 | Kreuzungsbereich | 74 | Felgenbodenbereich |
| 16 | Speichenloch | 75 | Trennfläche |
| 20 | Faserverbundwerkstoff | 77 | Ausrichteinheit |
| 21 | Faserlage, Sichtlage | 80 | Ringeinrichtung |
| 21a | Verstärkungsabschnitt | 80a | Ringeinheit |
| 21b | umgeschlagener Abschnitt | 80b | Material von 80a |
| 22 | Faserlage, Sichtlage | 81-83 | Ringsegmente |
| 22b | umgeschlagener Abschnitt | 84 | Felgenbettkontaktfläche |
| 23 | Faserlage, Sichtlage | 85 | Ringsegmente |
| 24 | Faserlage | 86 | Ringsegmente |
| 25 | Verstärkungslage | 87 | Ausrichteinheit |
| 29 | Faserstrang | 90 | Schließring |
| 30 | Prepreg | 91 | Klemmabschnitt |
| 32 | Schlauch | 100 | Fahrrad |
| 40 | Überzug | 101 | Rad, Vorderrad |
| 40a | Ringüberzug | 102 | Rad, Hinterrad |
| 40b | Material von 40a,51b,61b | 103 | Rahmen |
| 41 | Pressring | 104 | Gabel, Federgabel |
| 42 | Pressring | 105 | Hinterraddämpfer |
| 43 | Dicke | 106 | Lenker |
| 50 | Werkzeugeinrichtung | 107 | Sattel |
| 51 | Formeinrichtung | 109 | Speiche |
| 51a | Formeinheit | 110 | Nabe |
| 51b | Formüberzug | 112 | Tretkurbel |
| 52 | Flankenkontaktfläche | | |

## Patentansprüche

1. Werkzeugeinrichtung (50) zur Herstellung einer Felge (1) für
wenigstens teilweise muskelbetriebene Fahrzeuge, und insbesondere Fahrräder (100), mit gegenüberliegenden Felgenflanken (2, 3), einem Felgenbett (5) und einem Felgenboden (4) und an den Felgenflanken (2, 3) ausgebildeten Felgenhörnern,
umfassend zwei Formeinrichtungen (51, 61) und eine Ringeinrichtung (80),
wobei die Formeinrichtungen (51, 61) jeweils Kontaktflächen (52, 62) zur Ausbildung wenigstens eines Teils einer Felgenflanke (2, 3) und der äußeren Sichtfläche der Felgenhörner aufweisen, **dadurch gekennzeichnet,**
**dass** die Ringeinrichtung (80) zur Ausbildung des Felgenbettes (5) und der axial nach innen ausgerichteten Flächen (8a, 9a) der Felgenhörner (6, 7) dient,
wobei die Ringeinrichtung (80) eine Ringeinheit (80a) und die Formeinrichtungen (51, 61) jeweils eine Formeinheit (51a, 61a) umfassen,
und wobei wenigstens eine der Einheiten von Ringeinheit (80a) und Formeinheiten (51a, 61a) aus einem weniger elastischen Material (80b, 80c) und wenigstens einen daran anbringbaren Überzug (35, 40a, 80a) aus einem stärker elastischen Material (40b) umfasst,
und wobei die Ringeinrichtung (80) eine Ringeinheit (80a) aus einem weniger elastischen Material (80b) und wenigstens einen Ringüberzug (40a) aus einem stärker elastischen Material (40b) umfasst, **dadurch gekennzeichnet, dass**
eine Dicke (43) des Überzugs (40) zwischen 0,1 mm und 10 mm beträgt, und dass die Formeinrichtungen (51, 61) jeweils eine Formeinheit (51a, 61a) aus einem weniger elastischen Material (80c) und wenigstens einen darauf anbringbaren Formüberzug (51b, 61b) aus einem stärker elastischen Material (40b) umfasst.

2. Werkzeugeinrichtung (50) nach dem Anspruch 1, wobei eine Dicke (43) des Überzugs (40) zwischen 0,16 mm und 6 mm beträgt.

3. Werkzeugeinrichtung (50) nach einem der vorhergehenden Ansprüche, wobei die Ringeinrichtung (80) im radial inneren Bereich eine Kontaktfläche (84) zur Ausbildung des Felgenbettes (5) aufweist.

4. Werkzeugeinrichtung (50) nach dem vorhergehenden Anspruch, wobei die Ringeinrichtung (80) zwei separate axial beabstandete Pressringe (41, 42) umfasst, welche an die Innenform des Felgenhorns (6, 7) angepasst sind.

5. Werkzeugeinrichtung (50) nach einem der vorhergehenden Ansprüche, wobei ein Verhältnis der Elastizitätskoeffizienten der Materialien der Ringeinheit (80a) und des Ringüberzugs (40a) größer 2 oder 5 beträgt und/oder wobei ein Verhältnis der Elastizitätskoeffizienten der Materialien der Formeinheit (80a) und des Formüberzugs (40a) größer 2 oder 5 beträgt.

6. Werkzeugeinrichtung (50) nach einem der vorhergehenden Ansprüche, wobei der Ringüberzug (40a) und der Formüberzug wenigstens zum Teil aus einem Werkstoff besteht, welcher einer Gruppe von Werkstoffen entnommen ist, die gummiartigen Werkstoffe und Silikonwerkstoffe umfasst.

7. Werkzeugeinrichtung (50) nach einem der vorhergehenden Ansprüche, wobei eine Dicke (43) des Ringüberzugs (41, 42) und/oder des Formüberzug größer 0,5 mm und/oder kleiner 5 mm beträgt.

8. Werkzeugeinrichtung (50) nach einem der vorhergehenden Ansprüche, wobei eine Dicke (43) des Ringüberzugs (41, 42) größer als die Hälfte der axialen Breite (6a, 7a) des Felgenhorns (6,7) und/oder geringer als die dreifache axiale Breite (6a, 7a) des Felgenhorns (6,7) ist.

9. Werkzeugeinrichtung (50) nach einem der vorhergehenden Ansprüche, wobei zur Herstellung zweier Felgen (1) mit unterschiedlichen Abmessungen die gleiche Ringeinheit (80a) mit unterschiedlichen Ringüberzügen (40a) einsetzbar ist.

10. Verwendung einer Werkzeugeinrichtung (50) zur Herstellung einer Felge (1) für wenigstens teilweise muskelbetriebene Fahrzeuge und insbesondere Fahrräder (100), wobei die Werkzeugeinrichtung (50) gemäß einem der vorhergehenden Ansprüche ausgebildet ist.

## Claims

1. Tool device (50) for manufacturing a rim (1) for at least partially muscle-powered vehicles and in particular bicycles (100), having opposite rim flanks (2, 3), a rim well (5) and a rim base (4), and rim flanges configured on the rim flanks (2, 3),
comprising two molding devices (51, 61) and a circular device (80),
wherein the molding devices (51, 61) each comprise contact surfaces (52, 62) for forming at least part of a rim flank (2, 3) and the external visible surface of the rim flanges, **characterized in that** the circular device (80) serves to form the rim well (5) and the axially inwardly oriented surfaces (8a, 9a) of the rim flanges (6, 7),
wherein the circular device (80) comprises an annular unit (80a), and the molding devices (51, 61), one molding unit (51a, 61a) each,
and wherein at least one of the units of an annular unit (80a) and molding units (51a, 61a) consists of a less elastic material (80b, 80c) and at least one coating (35, 40a, 80a) for attachment thereto, of a more elastic material (40b),
and wherein the circular device (80) comprises an annular unit (80a) of a less elastic material (80b) and at least one ring coating (40a) of a more elastic material (40b),
**characterized in that**
the thickness (43) of the coating (40) is between 0.1 mm and 10 mm,
and that the molding devices (51, 61) each comprise a molding unit (51a, 61a) of a less elastic material (80c) and at least one mold coating (51b, 61b) for attachment thereto, of a more elastic material (40b).

2. The tool device (50) according to claim 1, wherein the thickness (43) of the coating (40) is between 0.16 mm and 6 mm.

3. The tool device (50) according to any of the preceding claims, wherein in the radially inwardly region, the circular device (80) comprises a contact surface (84) for forming the rim well (5).

4. The tool device (50) according to the preceding claim, wherein the circular device (80) comprises two separate, axially spaced-apart pressing rings (41, 42), which match the inner outline of the rim flange (6, 7).

5. The tool device (50) according to any of the preceding claims, wherein the ratio of the coefficient of elasticity of the materials of the annular unit (80a) and of the ring coating (40a) is higher than 2 or 5, and/or wherein the ratio of the coefficient of elasticity of the materials of the molding unit (80a) and of the mold coating (40a) is higher than 2 or 5.

6. The tool device (50) according to any of the preceding claims, wherein the ring coating (40a) and the mold coating consist at least in part of a material taken from a group of materials comprising rubber-like materials and silicone materials.

7. The tool device (50) according to any of the preceding claims, wherein the thickness (43) of the ring coating (41, 42) and/or of the mold coating is more than 0.5 mm and/or less than 5 mm.

8. The tool device (50) according to any of the preceding claims, wherein the thickness (43) of the ring coating (41, 42) is greater than half the axial width (6a, 7a) of the rim flange (6, 7) and/or less than three times the axial width (6a, 7a) of the rim flange (6, 7).

9. The tool device (50) according to any of the preceding claims, wherein for manufacturing two rims (1) in different dimensions, the same annular unit (80a) may be employed by means of different ring coatings (40a).

10. Use of a tool device (50) for manufacturing a rim (1) for at least partially muscle-powered vehicles and in particular bicycles (100), wherein the tool device (50) is configured according to any of the preceding claims.

## Revendications

1. Dispositif d'outil (50) destiné à la fabrication d'une jante (1) pour des véhicules entraînés, au moins en partie, par force musculaire, et en particulier pour des bicyclettes (100), ayant des flancs de jante (2, 3) opposés, une base de jante (5) et un fond de jante (4) ainsi que des rebords de jante formés sur les flancs de jante (2, 3),
comprenant deux dispositifs de formage (51, 61) et un dispositif annulaire (80), dans lequel les dispositifs de formage (51, 61) présentent chacun des surfaces de contact (52, 62) pour former au moins une partie d'un flanc de jante (2, 3) et la surface extérieure visible des rebords de jante, **caractérisé par le fait que** le dispositif annulaire (80) sert à former la base de jante (5) et les surfaces dirigées axialement vers l'intérieur (8a, 9a) des rebords de jante (6, 7),
dans lequel le dispositif annulaire (80) comprend une unité annulaire (80a) et les dispositifs de formage (51, 61) comprennent chacun une unité de formage (51a, 61a),
et dans lequel au moins l'une des unités annulaires (80a) et de formage (51a, 61a) est constituée d'un matériau moins élastique (80b, 80c) et comprend au moins un revêtement (35, 40a, 80a) en un matériau plus élastique (40b), qui peut y être appliqué,
et dans lequel le dispositif annulaire (80) comprend une unité annulaire (80a) constituée d'un matériau moins élastique (80b) et au moins un revêtement annulaire (40a) constitué d'un matériau plus élastique (40b), **caractérisé par le fait qu'**
une épaisseur (43) du revêtement (40) est comprise entre 0,1 mm et 10 mm et que les dispositifs de formage (51, 61) comprennent chacun une unité de formage (51a, 61a) en un matériau moins élastique (80c) et au moins un revêtement de formage (51b, 61b) en un matériau plus élastique (40b), qui peut y être appliqué.

2. Dispositif d'outil (50) selon la revendication 1, dans lequel une épaisseur (43) du revêtement (40) est comprise entre 0,16 mm et 6 mm.

3. Dispositif d'outil (50) selon l'une quelconque des revendications précédentes, dans lequel le dispositif annulaire (80) présente, dans la zone radialement intérieure, une surface de contact (84) pour former la base de jante (5).

4. Dispositif d'outil (50) selon la revendication précédente, dans lequel le dispositif annulaire (80) comprend deux anneaux de pression séparés (41, 42) espacés axialement qui sont adaptés à la forme intérieure du rebord de jante (6, 7).

5. Dispositif d'outil (50) selon l'une quelconque des revendications précédentes, dans lequel un rapport des coefficients d'élasticité des matériaux de l'unité annulaire (80a) et du revêtement annulaire (40a) est supérieur à 2 ou 5 et/ou dans lequel un rapport des coefficients d'élasticité des matériaux de l'unité de formage (80a) et du revêtement de formage (40a) est supérieur à 2 ou 5.

6. Dispositif d'outil (50) selon l'une quelconque des revendications précédentes, dans lequel le revêtement annulaire (40a) et le revêtement de formage sont constitués au moins en partie d'un matériau qui est pris dans un groupe de matériaux qui comprend des matériaux de type caoutchouc et des matériaux de silicone.

7. Dispositif d'outil (50) selon l'une quelconque des revendications précédentes, dans lequel une épaisseur (43) du revêtement annulaire (41, 42) et/ou du revêtement de formage est supérieure à 0,5 mm et/ou inférieure à 5 mm.

8. Dispositif d'outil (50) selon l'une quelconque des revendications précédentes, dans lequel une épaisseur (43) du revêtement annulaire (41, 42) est supérieure à la moitié de la largeur axiale (6a, 7a) du rebord de jante (6, 7) et/ou inférieure à trois fois la largeur axiale (6a, 7a) du rebord de jante (6, 7).

9. Dispositif d'outil (50) selon l'une quelconque des revendications précédentes, dans lequel la même unité annulaire (80a) avec des revêtements annulaires (40a) différents peut être utilisée pour fabriquer deux jantes (1) de dimensions différentes.

10. Utilisation d'un dispositif d'outil (50) pour la fabrication d'une jante (1) pour des véhicules entraînés, au moins en partie, par force musculaire, et en particulier pour des bicyclettes (100), dans lequel le dispositif d'outil (50) est conçu selon l'une quelconque des revendications précédentes.
